# FASCICULE DE BREVET EUROPEEN

(11) **EP 0 979 495 B1**
(45) Date de publication et mention de la délivrance du brevet: **14.12.2005**
(21) Numéro de dépôt: 98914911.7
(22) Date de dépôt: 11.03.1998
(51) Int. Cl.: G07F 7/10, G07F 9/08

(54) **PROCEDE DE CERTIFICATION D'UN CUMUL DANS UN LECTEUR**
VERFAHREN ZUM BEGLAUBUGEN EINER GESAMTSUMME IN EINEM LESER
ROLLUP CERTIFICATION IN A READER

(30) Priorité: 03.04.1997 FR 9704090
(43) Date de publication de la demande: 16.02.2000
(73) Titulaire: GEMPLUS, 13881 Gémenos Cédex (FR)
(72) Inventeur: METHLOUTHI, Mounji, F-13114 Puyloubier (FR); VALADIER, Jean-Louis, F-13011 Marseille (FR)
(86) Numéro de dépôt international: PCT/FR1998/000511
(87) Numéro de publication internationale: WO 1998/044464

(56) Documents cités:
- EP-A- 0 363 122
- EP-A- 0 417 007
- EP-A- 0 621 570
- EP-A- 0 637 004
- EP-A- 0 671 712
- WO-A-97/02547
- GB-A- 2 287 565

## Description

La présente invention a pour objet un procédé de certification d'un cumul dans un lecteur, ou terminal, quand ce lecteur est utilisé avec un support portable de paiement (par exemple, de préférence une carte à puce). Dans la présente demande le terme de carte à puce recouvre le terme de support portable de circuit électronique.

Par cumul, on visera principalement des opérations arithmétiques monétaires (ou portant sur des unités), la certification servant à prévenir les fraudes. Mais sous le vocable "cumul" on pourra tout aussi bien représenter des informations de nature quelconque, la certification servant à assurer l'authentification de ces informations quelconques. Bien que par la suite on parlera en permanence de cumul, pour la simplicité de la compréhension, il va de soi qu'on pourra appliquer l'invention à des certifications d'informations quelconques et en particulier simplement à la certification du montant d'une transaction.

Il est connu du document EP0417007 un procédé de certification d'une information (M) dans une caisse électronique par une carte électronique, le montant (M) étant dissimulé dans la caisse sous une forme numérique chiffrée Y au moyen d'une fonction de chiffrement F associée à une clé (CS). La carte à puce reçoit le résultat chiffré Y, en extrait une image à l'aide de l'algorithme inverse F⁻¹ en utilisant la clé (CS), puis retransmet à la caisse un nouveau montant chiffré Y' à l'aide de l'algorithme F et de la clé (CS). Cette solution n'est pas satisfaisante d'un point de vue de la sécurité.

Dans l'état de la technique, le paiement par objet portable, en pratique par carte à puce, s'effectue de la manière suivante. Un acheteur, au moment du paiement de son achat, place sa carte à puce de paiement bancaire dans un lecteur de carte à puce qui est détenu par un vendeur. Celui-ci provoque ensuite un paiement dont l'apparence, pour l'acheteur, est matérialisée par l'apparition sur l'écran du lecteur du montant de son achat et par une invitation pour cet acheteur à composer le code secret de sa carte. Lorsqu'il a composé et validé le code secret de sa carte, l'achat est termine. En fait, au moment de cette terminaison, le lecteur effectue deux types d'opération. Premièrement, il mémorise les coordonnées bancaires de l'acheteur (il les a prélevé au passage dans la carte de l'acheteur) en correspondance avec le montant de l'achat ainsi qu'avec d'autres données accessoires (la date, l'heure, les références du lecteur ou du vendeur). Par ailleurs, le lecteur effectue une opération de cumul consistant à additionner le montant de l'achat effectué par cet acheteur à un cumul des achats effectués par les acheteurs précédents qui se sont présentés dans le magasin, et qui ont été servis par le même lecteur. Les deux informations sont donc d'une part une information nécessaire au débit du compte courant de l'acheteur et d'autre part au crédit du compte courant du vendeur.

Le cumul ainsi enregistré a donc une valeur financière et il convient de protéger l'intégrité de cette valeur des manipulations frauduleuses. Pour y arriver, il est connu de munir le lecteur d'un circuit de sécurité, dit SAM (Secure Application Module), qui effectue une certification des cumuls. La certification revient à calculer un certificat, une chaîne de caractères binaires, qui est un résultat d'une opération de chiffrement du cumul avec un algorithme de chiffrement. L'algorithme de chiffrement est en général du type DES, du type RSA, ou autre. La particularité des algorithmes de ce type est de pouvoir être paramétrés par une clé de chiffrement. La clé de chiffrement est normalement secrète: elle est mémorisée à l'intérieur du circuit SAM. La complexité des algorithmes de chiffrement cités est telle que l'on admet, aujourd'hui, que ces algorithmes ne sont pas cassables, c'est-à-dire qu'il n'est pas possible de retrouver la clé de chiffrement à partir de la connaissance d'un montant, connu, qui a été chiffré et dont on connaît le résultat de chiffrement. Le résultat du chiffrement est justement ce certificat.

Autrement dit, on a remplacé avec ce système de sécurité une information sensible, l'information de cumul, par un couple d'informations protégées, le cumul associé à son certificat.

En fin de journée, au moment où il fait sa caisse, le vendeur connecte son lecteur à un service central: en général le service central de sa banque. Il transmet alors à sa banque les informations relatives aux acheteurs et les informations qui le concernent: le cumul des achats effectués dans son magasin et le certificat attaché à ce cumul. Dans le service central les vérifications sont faites, notamment en utilisant le certificat, et le montant du cumul est porté au crédit du compte du vendeur.

Pour l'opérateur central, le temps aidant, le nombre de lecteurs qui se connectent chaque soir peut être très important. Il peut atteindre plusieurs millions.

Actuellement, pour des raisons de prudence bien compréhensibles, il est admis qu'il est nécessaire de changer, dans tous les lecteurs, les circuits SAM périodiquement. Par exemple, la périodicité est de l'ordre de deux ou trois ans. Cette opération est d'une part onéreuse et par ailleurs très délicate à mener, compte-tenu de ce qu'elle ne peut pas être effectuée partout en même temps, qu'elle est nécessaire, et qu'elle n'est de toute façon pas pratique.

D'une manière plus générale encore, si on remplace les cartes de paiement bancaire des clients par des cartes de type porte-monnaie électronique, le problème devient encore plus crucial. En effet, dans le cas de la carte, ou du support portable, porte-monnaie électronique, il n'y a plus d'identification d'un compte courant de client. Le porte-monnaie peut être anonyme et il contient des unités monétaires. Il n'y a donc par ailleurs pas de possibilité de vérification de ce fait.

Dans ce dernier cas comme dans le premier cas, on envisage que des fraudeurs habiles pourront être tentés de falsifier ou de chercher à savoir, par des opérations très fréquentes, quel est le secret du circuit SAM.

L'invention a pour objet de remédier à cet inconvénient en prévoyant de ne pas munir les lecteurs de circuits de sécurité. De ce fait la gestion de ces lecteurs va être complètement supprimée. Il n'y en a plus du tout. Pour néanmoins conserver le confort de sécurité apporté par le système de cumul associé à un certificat, il est prévu de maintenir un tel système. Cependant, dans l'invention, la paramétrisation des algorithmes de chiffrement ne sera plus effectuée par une clé privée secrète contenue dans le circuit de sécurité, lui-même contenu dans le lecteur, mais par une clé privée secrète contenue dans une mémoire de la carte à puce du client. On montrera ainsi qu'on peut s'affranchir totalement de la nécessité d'avoir un circuit SAM dans le lecteur. En pratique, l'exécution des algorithmes de chiffrement sera même réalisée dans la carte.

L'invention a donc pour objet un procédé de certification tel que revendiqué dans les revendications independantes 1 et 2.

On rappelle qu'à partir de deux clés associées on peut signer, c'est-à-dire chiffrer, des données avec une clé (par exemple une clé privée) et les déchiffrer avec la clé associée (par exemple une clé publique) ou vice-versa. Par ailleurs, des clés associées ne peuvent être trouvées, l'une à partir de l'autre, que dans un seul sens: une clé privée pouvant engendrer une clé publique. Dans le cas d'algorithmes de type DES, on parle de clés mères et de clés filles, une clé mère pouvant avoir plusieurs filles.

Le principe de l'invention est donc de stocker dans un terminal un certificat, CERTIFICAT 0, relatif à un montant et à une clé publique CP0. La clé publique CP0 correspond à une clé privée CS0 avec laquelle le certificat CERTIFICAT 0 a été élaboré de manière sécurisée (dans la carte). Cette clé publique CP0 est la clé publique d'une carte avec laquelle on a effectué une transaction précédente. D'une transaction à l'autre, la clé publique enregistrée dans le terminal peut changer. Dans l'invention, à chaque transaction, on stocke une autre clé publique dans le terminal. La clé publique stockée correspond à la clé privée avec laquelle le dernier certificat a été calculé. Il découle de cette solution qu'une carte peut vérifier que le cumul, CUMUL 0, stocké dans un terminal correspond bien au CERTIFICAT 0 stocké dans ce terminal puisque on peut le retrouver, dans la carte de préférence, avec la clé publique (clé publique du CERTIFICAT 0) stockée elle aussi dans le terminal.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- figure 1: un système avec une carte à puce et un lecteur utilisables pour mettre en oeuvre le procédé de l'invention;
- figure 2 et figure 3: les principales étapes de deux algorithmes préférés, montrant les différentes étapes du procédé de l'invention;
- figures 4a à 4e: des représentations schématiques d'opérations effectuées dans les circuits électroniques de la carte et/ou du lecteur.

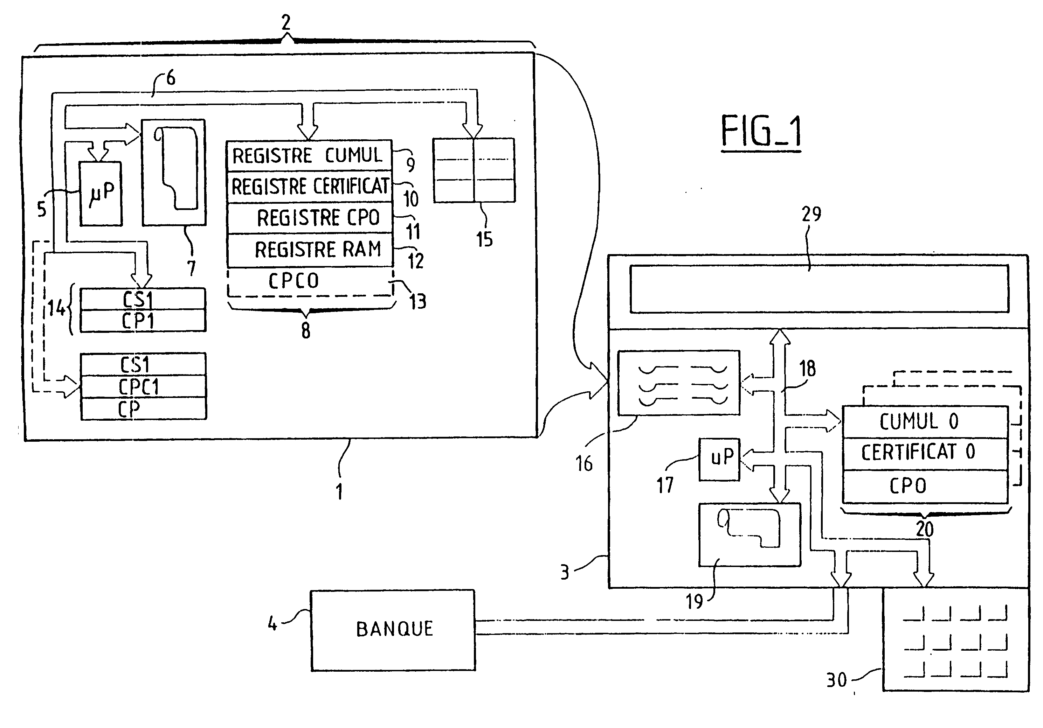

La figure 1 montre une carte à puce 1 comprenant un circuit électronique, une puce 2. La carte 1 est destinée à entrer en relation avec un lecteur 3. Le lecteur 3 est lui-même doté de moyens pour entrer en relation avec un service central 4, le service informatique d'une banque par exemple, périodiquement. Les relations entre le lecteur 3 et le service 4 de la banque sont de type connu et n'interviennent pas dans l'invention. Le circuit électronique 2 de la carte à puce comporte un microprocesseur 5 en relation par un bus 6 avec une mémoire programme 7, une mémoire à accès aléatoire 8 comportant notamment un ensemble de registres 9 à 13. Le bus 6 est encore en relation avec une mémoire non volatile 14 et une interface de connexion représentée par un connecteur 15. La mémoire programme 7 et la mémoire non volatile 14 seront, par exemple, constituée à base de cellules mémoires de type EPROM ou EEPROM , ou du type mémoire à accès aléatoire sauvegardée, alors que la mémoire 8 va comporter un ensemble de mémoires statiques ou dynamiques volatiles. La mémoire 8 n'est cependant pas nécessairement volatile. Le lecteur 3 comporte un connecteur 16 destiné à venir au contact du connecteur 15 de la carte à puce 1 quand celle-ci est engagée dans le lecteur. Le lecteur 3 comporte également, de préférence, un microprocesseur 17 en relation par un bus 18 avec une mémoire programme 19 et une mémoire de données 20. De préférence, la mémoire 19 et la mémoire 20 sont non volatiles.

Les mémoires programmes 7 et 19 comportent les programmes exécutables par les microprocesseurs 5 et 17 respectivement pour effectuer entre autres les opérations conformes au procédé de l'invention d'une part, et pour assurer par ailleurs périodiquement le transfert des informations contenues dans la mémoire 20 au service 4 de la banque d'autre part. A l'initialisation du procédé, le centre serveur 4 peut avoir téléchargé dans les lecteurs 3 un certificat correspondant à un cumul égal à zéro et résultant d'un algorithme de chiffrement (RSA par exemple) effectué sur ce cumul zéro avec une clé privée initiale d'une carte fictive. La clé publique correspondant à ce cumul zéro est aussi téléchargée dans les lecteurs 3. Cette clé privée de certification est conservée par le centre serveur 4 (qui est l'émetteur de la carte) tandis que la clé publique de certification correspondante est téléchargée dans les terminaux.

Le procédé de l'invention implique qu'on stocke dans le circuit 2 de la carte 1, notamment dans la mémoire non volatile 14, un couple de clés de chiffrement associées: une clé privée, CS1 pour la carte 1, et une clé publique, CP1 pour la carte 1 également. Par ailleurs, on stocke dans la mémoire 20 du lecteur, de préférence d'une manière non volatile au cas où il y aurait une coupure de courant, un certificat précédent CERTIFICAT 0, une clé publique CP0 relative à une carte à puce précédente avec laquelle le certificat mémorisé, CERTIFICAT 0, a été constitué.

On va décrire une solution préférée dans laquelle le CUMUL 0 est lui-même également stocké dans le lecteur 3. Cependant, comme on le verra par la suite, compte tenu de la certification qui est une redondance du cumul, on pourrait même éviter d'avoir à stocker ce cumul lui-même. Pour l'instant on admettra qu'un cumul CUMUL 0, relatif à une transaction précédente, est également stocké dans la mémoire 20.

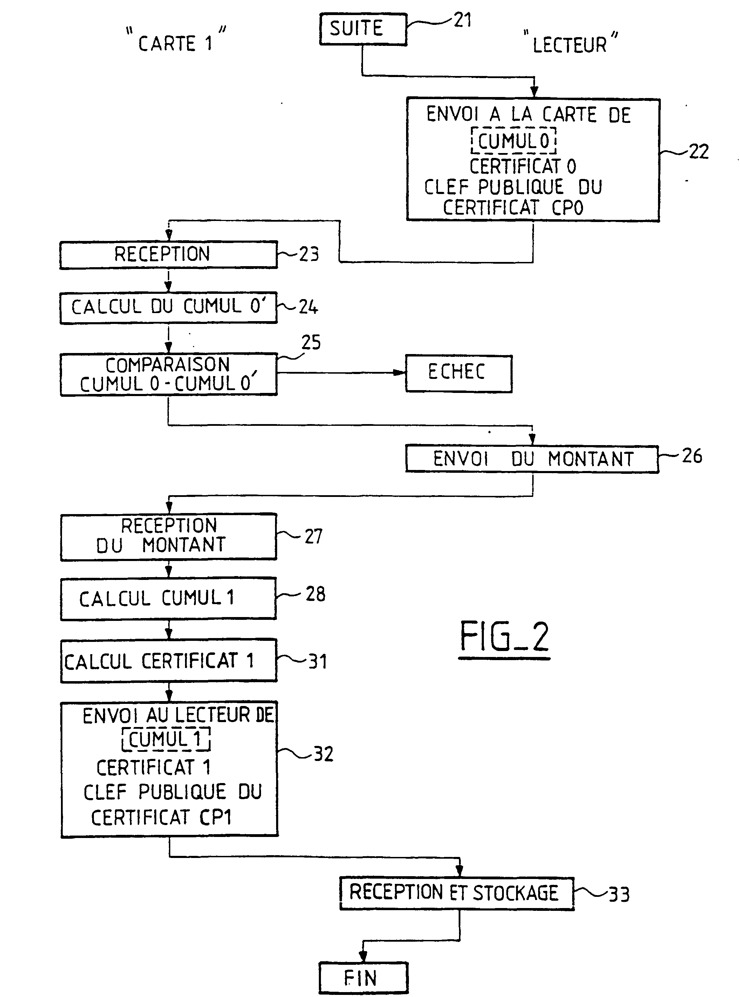

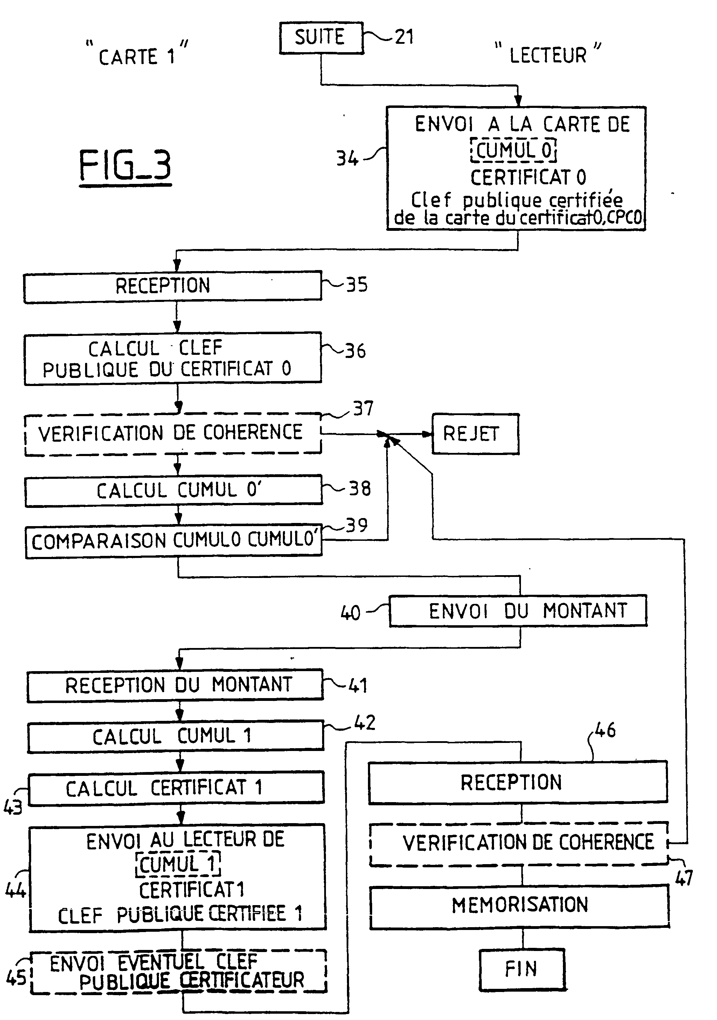

Dans une première opération, étape 21, figure 2 ou 3, on met en oeuvre un protocole d'entrée en relation de la carte 1 avec le lecteur 3. Ce protocole est préliminaire à l'invention, il est de type connu et, en ce qui concerne l'invention, il ne nécessite aucune particularité. D'une manière habituelle cependant, ce protocole de reconnaissance et d'entrée en relation, comportera l'obligation pour l'acheteur de composer son code secret sur un clavier du lecteur de manière à ce que le code secret puisse être vérifié par ce lecteur.

Une première étape du procédé, étape 22, figure 2, comporte l'envoi par le lecteur 3 à la carte 1 du dernier état de cumul mémorisé dans ce lecteur. En pratique, le lecteur envoie donc le CERTIFICAT 0, la clé publique CP0 du CERTIFICAT 0 et, de préférence, le CUMUL 0 à la carte 1. La carte 1 reçoit au cours d'une étape 23 ces éléments, et le programme contenu dans la mémoire 7 provoque le stockage du cumul CUMUL 0 dans le registre 9 de cumul, du certificat CERTIFICAT 0 dans le registre 10 de certificat et de la clé publique CP0 du certificat CERTIFICAT 0 dans le registre 11 de la mémoire 8.

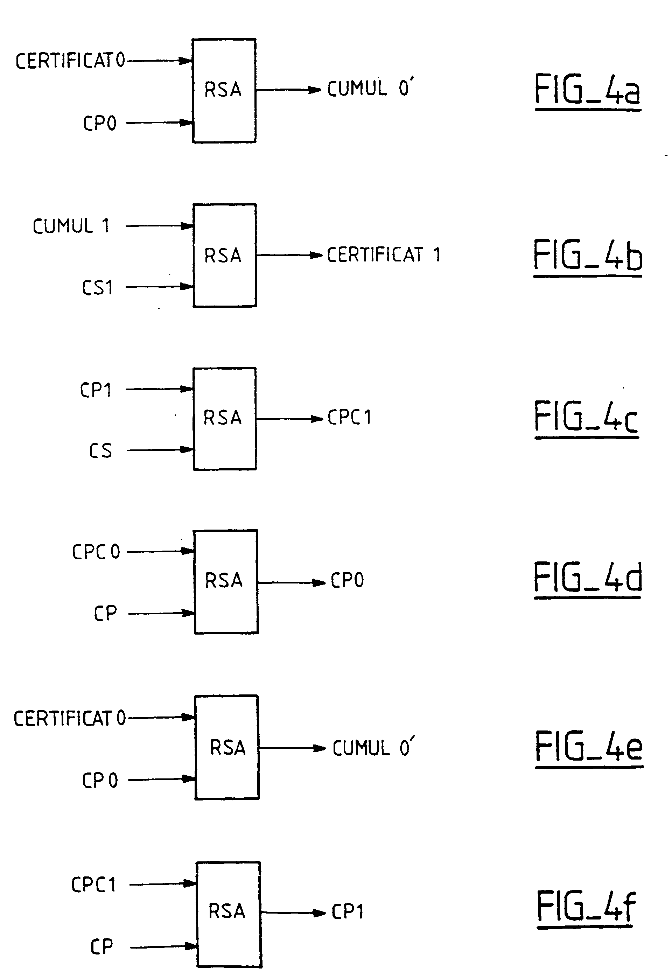

Selon l'invention, la carte va premièrement se livrer à une opération de vérification de la cohérence du lecteur. Elle vérifie en fait la cohérence des informations: structure ou format des certificats, après chiffrement de ce certificat en utilisant la clé publique. La carte teste en quelque sorte le fait que le lecteur ne soit pas un lecteur falsifié ou frauduleux ou que les informations n'aient pas été manipulées. Dans ce but, d'une manière préférée, on calcule dans la carte, opération 24, une image du cumul CUMUL 0, appelé ici CUMUL 0'. La figure 4a montre fonctionnellement le principe de l'étape 24. Cette étape consiste à chiffrer le certificat CERTIFICAT 0 (disponible maintenant dans le registre 10) par un algorithme de type retenu dans le système, par exemple ici, pour être simple, un algorithme de type RSA. La mise en oeuvre de l'algorithme est effectuée par utilisation de la clé publique CP0 disponible maintenant dans le registre 11.

On rappelle que la clé publique CP0 relative à une carte 0 précédente, est associée à une clé privée CS0 qui est inconnue. En effet, la clé privée CS0 est contenue, de manière sécurisée, dans une carte 0 précédente à laquelle on n'a pas accès. La composition du certificat CERTIFICAT 0 par une carte précédente a consisté à chiffrer le CUMUL 0 par la clé privée CS0 de manière à obtenir le certificat CERTIFICAT 0.

Selon le principe indiqué ci-dessus de l'association des clés, il est possible de retrouver le cumul CUMUL 0 en utilisant la clé publique CP0 associée à la clé privée CS0. On indique, figure 4a, qu'il s'agit du CUMUL 0' parce qu'en fait on ne sait pas si le CUMUL 0 vrai, de préférence stocké dans le lecteur 3, est un cumul honnête ou non. A l'issue de l'opération 24, on dispose donc dans un registre à accès aléatoire 12 du CUMUL 0' . Il est alors possible avec les instructions du programme de la mémoire 7 de provoquer la comparaison, opération 25, du cumul CUMUL 0 et du cumul CUMUL 0'. Si cette comparaison montre des différences, le programme 7 provoquera un échec de la transaction et refusera d'aller plus loin. Si cette comparaison est correcte, la suite des opérations se produit.

De préférence, on fait calculer le cumul CUMUL 0' (opération 24), et la comparaison des deux cumuls (opération 25), par le microprocesseur 5 en exécution du programme de la mémoire 7. Il serait tout à fait possible cependant de transmettre par les connecteurs 15 et 16 les éléments du programme 7 au microprocesseur 17 et lui faire exécuter une partie d'un programme qui ne serait alors pas nécessairement contenu dans la mémoire 19. En variante, le programme de vérification est contenu en mémoire 19, mais il est exécuté par le microprocesseur 5.

En outre, la vérification dont il est question dans les opérations 24 et 25, qui implique le stockage et le transfert du cumul CUMUL 0, pourrait être remplacée par une vérification de l'intégrité intrinsèque du cumul CUMUL 0' calculé. En effet, il est connu dans les algorithmes, notamment les algorithmes de type RSA, que le résultat cumul CUMUL 0' (figure 4a) calculé à partir d'un certificat CERTIFICAT 0 et d'une clé publique CP0 normale, doit avoir une conformation de bits particulière. On peut alors faire sur cette conformation des vérifications de format. Par exemple, sur un cumul CUMUL 0' qui serait codé sur 512 bits, seuls une dizaine de bits servent au cumul lui-même. Tous les autres sont des bits de conformation (structure, format, identifiant). A ce titre d'exemple, on peut alors prendre des lots de bits, par exemple de 64 bits, la parité de chaque lot devant être, selon la nature d'une clé, alternée d'un lot à l'autre ou bien tous de la même parité ou autre. D'autres vérifications de type intrinsèque sont envisageables. Ces vérifications intrinsèques sont telles que, si le certificat CERTIFICAT 0 n'a pas été produit avec une clé privée CS0 (parce que finalement un fraudeur ne la connaissait pas et a inventé une clé publique CP0), dans ce cas le cumul CUMUL 0' calculé n'aura aucune signification cohérente. Avec la structure propre à l'algorithme, on pourra voir que ce résultat est foncièrement faux, même si, pour la satisfaction du fraudeur, les bits servant au cumul indiquent une valeur élevée.

Une fois que l'opération de vérification du cumul précédent a été mené à terme, le terminal 3 envoie le montant de la transaction en cours avec l'acheteur à la carte à puce 1. En pratique l'envoi du montant peut avoir été effectué non pas en une étape 26 ultérieure mais au même moment que l'étape 22.

A une étape 27 suivante, la carte reçoit ce montant et calcule en une étape 28 un nouveau cumul: le cumul CUMUL 1. En pratique le cumul CUMUL 1 est la somme du cumul CUMUL 0 et du montant de la transaction qu'on est en train d'effectuer.

Les opérations 22 à 25 peuvent aussi intervenir avant que le montant n'apparaisse sur un écran 29 du lecteur, et que l'acheteur n'ait validé avec un clavier 30 son code secret.

Le procédé de l'invention se poursuit avec l'étape 31 au cours de laquelle, figure 4b, le microprocesseur 5 en application du programme de la mémoire 7, calcule le certificat CERTIFICAT 1 dans une étape 31. Le certificat CERTIFICAT 1 est obtenu en chiffrant le cumul CUMUL 1, nouveau cumul, en mettant en oeuvre un algorithme de chiffrement (par exemple de type RSA) utilisant la clé privée de la carte 1, CS1. De préférence le cumul CUMUL 1 est préalablement conformé (format, structure, identifiant ajouté) avant d'être chiffré. Ceci permet une étape de vérification ou de contrôle intrinsèque de la cohérence de cette information. Cette étape peut être mise en oeuvre soit par le lecteur soit par une carte suivante.

La carte 1 envoie ensuite en une étape 32 au lecteur 3 le certificat CERTIFICAT 1 qui vient d'être calculé, la clé publique CP1 qui est associée à la clé privée CS1 avec laquelle le certificat CERTIFICAT 1 a été calculé. En version préférée, le cumul CUMUL 1 lui-même est envoyé au lecteur 3.

Ces informations sont reçues au cours d'une étape 33 dans la mémoire 20 du lecteur 3. Soit ces informations prennent la place des informations précédentes, soit elles sont enregistrées dans un fichier, comme des enregistrements 20' suivants. Le système est alors disponible pour une transaction suivante, ce qui a été dit relatif à une carte 0 deviendra vrai pour une carte 1.

La figure 3 montre une variante préférée de l'invention dans laquelle on a encore plus compliqué le système pour le rendre encore moins fragile vis-à-vis des fraudeurs. Jusqu'à présent, on avait vu qu'il existait dans la carte des couples de clés associées CS1 et CP1. Dans la carte, la clé CS1 est logée dans une région secrète, elle est inaccessible en lecture pour affichage ou transmission. En pratique, on sait aboutir à une sécurité suffisante de ce point de vue. La clé publique CP1 elle, étant destinée à être transmise à un lecteur 3, n'est pas stockée dans une région inaccessible, elle est stockée dans une région tout à fait lisible de la mémoire 14.

Dans la variante, on va remplacer ce couple de clés par un autre couple ou un triplet de clés. Le but de la variante est d'empêcher un fraudeur d'agir au cas où ce fraudeur connaîtrait un couple, compatibles, de clés privée et publique associées. Le triplet de clés comporte comme précédemment la clé privée de la carte CS1. Il comporte, à la place de la clé publique CP1, une clé publique certifiée CPC1. Cette clé publique certifiée CPC1 a été obtenue, figure 4c, en faisant passer la clé publique CP1 de la carte 1 au travers d'un circuit de certification mettant en oeuvre un algorithme de chiffrement. Le circuit de certification, et donc l'algorithme, ont utilisé une clé privée de certification, CS, connue d'un organisme de certification. Dans un exemple, l'organisme de certification est l'organisme central: par exemple c'est la banque qui gère le service 4. Dans ce cas la clé privée CS de certification est inconnue de tout le monde (sauf du service 4). La clé privée CS n'est stockée ni dans les cartes à puce 1, ni dans aucun des lecteurs 3. Par contre une clé publique de certification CP associée à la clé privée de certification CS, avec laquelle la clé publique certifiée CPC1 a été élaborée, est elle-même stockée dans les cartes 1, ou dans les lecteurs 3, voire dans les deux.

De préférence, elle est stockée dans les cartes 1 seulement. Ceci a l'avantage, au fur et à mesure que les cartes sont changées, de pouvoir changer le couple clé privée de certification/clé publique de certification lui-même, tout en autorisant le système à fonctionner avec des anciens couples de clé privée de certification/clé publique de certification.

La figure 3 montre, à la suite de l'étape 21, comme précédemment, une étape 33 au cours de laquelle le lecteur 3 envoie à la carte le cumul CUMUL 0 (comme précédemment ce n'est pas nécessaire mais c'est préféré), le certificat CERTIFICAT 0 et la clé publique certifiée CPC0 de la carte avec laquelle le certificat CERTIFICAT 0 a été élaboré. Au cours d'une opération 35, la carte 1 reçoit ces éléments et commence par extraire au cours d'une opération 36 la clé publique CP0 de la carte 0. Cette opération est montrée par ailleurs sur la figure 4d. Cette opération 36 revient à chiffrer la clé publique certifiée CPC0 du certificat CERTIFICAT 0 en mettant en oeuvre un algorithme de chiffrement (RSA) utilisant la clé publique de certification CP. La clé CP est la clé associée à la clé privée de certification. Au cours de l'opération 36, on est alors capable de produire la clé publique CP0 de la carte avec laquelle le certificat CERTIFICAT 0 a été (théoriquement) élaboré. Ceci est représenté sur la figure 4d. Au cours d'une opération 27 optionnelle mais préférée (marquée en tirets), on réalise une vérification de cohérence intrinsèque de la clé CP0 obtenue. Cette vérification de cohérence est conforme à ce qui a été vu précédemment. Si la cohérence n'est pas acquise il y a un rejet et l'opération n'est pas exécutée. Si cette opération s'est bien passée, au cours d'une étape 38 suivante, on calcule le cumul CUMUL 0', comme à l'étape 24 (figure 4e). Ensuite, on effectue la comparaison des cumuls CUMUL 0 et CUMUL 0' à l'étape 39 comme à l'étape 25. En cas d'échec de cette comparaison, il y a une opération de rejet comme précédemment. Sinon, à l'étape 40, comme à l'étape 26, le montant est envoyé par le lecteur à la carte.

Le montant est reçu à l'étape 41 dans la carte, le cumul nouveau, CUMUL 1, est calculé à l'étape 42, le nouveau certificat, CERTIFICAT 1, est calculé à l'étape 43 (figure 4b), et à l'étape 44 la carte envoie au lecteur les éléments calculés, c'est-à-dire essentiellement le CERTIFICAT 1, de préférence dans la variante préférée le CUMUL 1, et par ailleurs, la clé publique certifiée de la carte 1: CPC1. Dans le cas où, d'une part, les clés publiques de certification sont contenues dans les cartes et où, par ailleurs, il est prévu de les changer régulièrement, au cours d'une opération 45 éventuelle, la carte 1 envoie en plus au lecteur la clé publique de certification CP qu'elle contient. De cette façon on assure la rotation facile des clés publiques CP de certification lorsque l'organisme de certification décide de les changer. Il lui suffit de distribuer à ses clients, des acheteurs, des cartes à puces munies de la nouvelle clé publique CP de certification correspondant à la clé privée CS avec laquelle la clé publique CP1 de la carte a elle-même été certifiée.

Au cours de l'opération 46 ces informations sont reçues dans le lecteur et mémorisées dans la mémoire 20 comme précédemment. De préférence, le lecteur se livre alors à une opération 47 de vérification de cohérence de la clé publique certifiée de la carte 1 qui vient de lui être donnée. Cette vérification de cohérence est du même type que celles vues précédemment. L'opération 47, représentée en partie figure 4f, revient d'abord à calculer cette clé publique CP1 en chiffrant la clé publique certifiée CPC1 par un algorithme de chiffrement RSA qui utilise pour ce chiffrement la clé publique de certification CP reçue également. En cas d'échec de vérification de cette cohérence, l'étape suivante 48 de mémorisation du cumul n'est pas entreprise.

En cas de rejet, le lecteur 3 reste dans son état initial avec comme dernière donnée entrée le cumul CUMUL 0 et le certificat CERTIFICAT 0.

Une clé est une chaîne importante de bits. Dans un exemple une clé à une longueur de 512 ou de 1024 bits.

Les cumuls peuvent être de plusieurs types. Il peut s'agir des cumuls de transaction de paiement, ou bien des cumuls de transaction de remboursement, ou encore des cumuls de transferts entre deux porte-monnaies électroniques par un lecteur. Par ailleurs, comme on l'a indiqué précédemment, plutôt que des cumuls d'unités monétaires il peut s'agir d'informations quelconques authentifiées. Dans ce cas, et notamment lorsque l'information est simplement un montant de transaction, il n'est pas nécessaire que le procédé de l'invention comprenne une étape consistant à calculer la nouvelle information sur la base de l'information précédente et d'une information de transaction. La nouvelle information peut être reçue, déduite ou lue par une carte avant d'être signée avec la clé privée de cette carte.

Plutôt que de ne chiffrer les informations, figure 4a à 4f, que par des clés, il est possible de les chiffrer par des clés et par des informations variables connues par ailleurs. Ces informations variables sont par exemple des dates, des numéros de série de carte, des états de compteur du circuit intégré de ces cartes. Dans ce cas ces éléments peuvent être également transmis par la carte puce au lecteur pour que celui-ci les mémorise et les retransmette, lors d'une opération suivante, à une carte suivante pour qu'elle puisse déchiffrer le cumul à partir du certificat. Elles sont aussi transmises au centre serveur au moment de la télécollecte.

Lors de la télécollecte du lecteur, l'ensemble des transactions électroniques et/ou du total des montants des transactions et du certificat associé peut être transféré au centre d'acquisition. Le centre d'acquisition peut effectuer alors des contrôles suivants :
- vérification de la validité de la signature électronique de chaque transaction s'assurant ainsi qu'elle n'a pas été modifiée,
- vérification de la cohérence du total reçu du terminal et du certificat associé,
- vérification que le total reçu du terminal correspond au cumul des transactions électroniques, ceci afin de s'assurer qu'aucune transaction n'a été ajoutée ou supprimée.

## Revendications

1. Procédé de certification d'une information dans un lecteur, comprenant les étapes suivantes
- on stocke dans une carte à puce un couple de clefs de chiffrement associées, clef privée (CS1) de la carte et clef publique (CP1) de la carte,
- la carte à puce reçoit (28) du lecteur un certificat précédent correspondant à une information précédente ainsi qu'une clef publique (CP0) précédente,
- la carte extrait (24) du certificat précédent, une image de l'information précédente en mettant en oeuvre un algorithme de chiffrement de ce certificat précédent en utilisant la clef publique précédente,
- la carte vérifie (25) que l'image de l'information est cohérente,
- la carte signe une nouvelle information avec sa clef privée (CS1) en mettant en oeuvre un algorithme de chiffrement pour obtenir un nouveau certificat (31) correspondant à la nouvelle information,
- et on mémorise (32, 33) dans le lecteur le nouveau certificat correspondant à la nouvelle information ainsi que la clef publique de la carte (CP1).

2. Procédé de certification d'une information dans un lecteur, comprenant les étapes suivantes
- on stocke dans une carte à puce un couple de clef de chiffrement associées, clef privée (CS0) de la carte et clef publique certifiée (CPC0) de la carte,
- on stocke dans la carte ou dans le lecteur une clef publique (CP) de certification, cette clef publique de certification étant associée à une clef privée (CS) de certification, la clef publique certifiée de la carte enregistrée dans la carte ayant été obtenue en chiffrant cette clef publique de la carte par un algorithme de chiffrage utilisant cette clef privée de certification
- la carte à puce reçoit (23) du lecteur un certificat précédent correspondant à une information précédente ainsi qu'une clef publique certifiée (CPCO) d'une carte précédente,
- la carte extrait la clef publique de la carte précédente en mettant en oeuvre un algorithme de chiffrement de la clef publique certifiée reçue de la carte précédente utilisant la clef publique de certification,
- la carte extrait (24) une image de l'information précédente en mettant en oeuvre un algorithme de chiffrement du certificat précédent utilisant la clef publique (CP0) de la carte précédente préalablement extraite,
- la carte vérifie (25) que l'image de l'information est cohérente,
- la carte signe une nouvelle information avec sa clef privée (CS1) en mettant en oeuvre un algorithme de chiffrement utilisant la clef privée de la carte pour obtenir un nouveau certificat correspondant à la nouvelle information,
- et on mémorise (44, 46) dans le lecteur le nouveau certificat, et la clef publique certifiée de la carte.

3. Procédé selon la revendication 2, **caractérisé en ce que**
- on vérifie (37) dans le lecteur la cohérence de la clef publique certifiée de la carte.

4. Procédé selon la revendication 1 **caractérisé en ce que**
- on vérifie dans le lecteur la cohérence du nouveau certificat.

5. Procédé selon la revendication 2 ou la revendication 3 **caractérisé en ce que**
- la carte vérifie la cohérence de la clef publique extraite.

6. Procédé selon l'une' des revendications 1 à 5, **caractérisé en ce que**
- on vérifie la cohérence par une vérification intrinsèque, propre à l'algorithme de chiffrement.

7. Procédé selon l'une des revendications 1 à 6, **caractérisé en ce que**
- on transmet à la carte l'information précédente,
- on vérifie que l'image de l'information précédente est cohérente avec cette information précédente, et
- on transmet au lecteur la nouvelle information.

8. Procédé selon la revendication 2 **caractérisé en ce que**
- on stocke la clef publique (CP) de certification des clefs dans la carte.

9. Procédé selon l'une des revendications 1 à 8, **caractérisé en ce que**
- on mémorise (20') dans le lecteur les informations, certificats et clefs publiques successifs.

10. Procédé selon l'une des revendications 1 à 9, **caractérisé en ce que** l'information représente un cumul et la transaction d'information de transaction représente un montant d'une transaction.

11. Procédé selon l'une des revendications 1 à 10 **caractérisé en ce que** la nouvelle information est calculée par la carte sur la base de l'information précédente et d'une information de transaction.

## Patentansprüche

1. Verfahren für die Zertifizierung einer Information in einem Lesegerät, das folgende Schritte umfasst:
- man speichert in einer Chipkarte ein miteinander verknüpftes Schlüsselpaar, einen privaten Schlüssel CS1 der Karte und einen öffentlichen Schlüssel CP1 der Karte,
- die Chipkarte empfängt (28) vom Lesegerät ein vorhergehendes Zertifikat für eine vorhergehende Information sowie einen vorhergehenden öffentlichen Schlüssel (CP0),
- die Karte extrahiert (24) aus dem vorhergehenden Zertifikat ein Bild der vorhergehenden Information unter Verwendung eines Verschlüsselungsalgorithmus dieses vorhergehenden Zertifikats mittels des vorhergehenden öffentlichen Schlüssels,
- die Karte prüft (25), ob das Datenbild konsistent ist,
- die Karte signiert eine neue Information mit ihrem privaten Schlüssel (CS1) unter Verwendung eines Verschlüsselungsalgorithmus, um ein neues Zertifikat (31) für die neue Information zu erhalten,
- und man speichert (32, 33) im Lesegerät das neue Zertifikat der neuen Information, sowie den öffentlichen Schlüssel (CP1) der Karte.

2. Verfahren für die Zertifizierung einer Information in einem Lesegerät, das folgende Schritte umfasst:
- man speichert in einer Chipkarte eine miteinander verknüpftes Schlüsselpaar, den privaten Schlüssel (CS0) der Karte und den zertifizierten öffentlichen Schlüssel (CPCO) der Karte,
- man speichert in der Karte oder im Lesegerät einen öffentlichen Zertifizierungsschlüssel (CP), wobei dieser öffentliche Zertifizierungsschlüssel mit einem privaten Zertifizierungsschlüssel (CS) verknüpft ist, und der in der Karte gespeicherte zertifizierte öffentliche Schlüssel der Karte durch Verschlüsselung dieses öffentlichen Schlüssels der Karte mit einem Verschlüsselungsalgorithmus, der diesen privaten Zertifierungsschlüssel benutzt, erhalten wurde.
- die Chipkarte empfängt (23) vom Lesegerät ein vorhergehendes Zertifikat für eine vorhergehende Information sowie den zertifizierten öffentlichen Schlüssel (CPCO) einer vorhergehenden Karte,
- die Karte extrahiert den öffentlichen Schlüssel der vorhergehenden Karte unter Verwendung eines Verschlüsselungsalgorithmus des zertifizierten öffentlichen Schlüssels, der von der vorhergehenden Karte erhalten wurde, mittels dem öffentlichen Zertifizierungsschlüssel,
- die Karte extrahiert (24) ein Bild der vorhergehenden Information unter Verwendung des Verschlüsselungsalgorithmus des vorhergehenden Zertifikats mittels dem vorher extrahierten öffentlichen Schlüssel (CP0) der vorhergehenden Karte,
- die Karte prüft (25), ob das Datenbild konsistent ist,
- die Karte signiert eine neue Information mit ihrem privaten Schlüssel (CS1) unter Verwendung eines Verschlüsselungsalgorithmus, der den privaten Schlüssel der Karte benutzt, um ein neues Zertifikat für die neue Information zu bekommen,
- und man speichert (44, 46) im Lesegerät das neue Zertifikat und den zertifizierten öffentlichen Schlüssel der Karte.

3. Verfahren gemäß Patentanspruch 2, **gekennzeichnet dadurch, dass**:
- man im Lesegerät die Konsistenz des zertifizierten öffentlichen Schlüssels der Karte überprüft (37).

4. Verfahren gemäß Patentanspruch 1, **gekennzeichnet dadurch, dass**
- man im Lesegerät die Konsistenz des neuen Zertifikats überprüft.

5. Verfahren gemäß Patentanspruch 2 oder Patentanspruch 3 **gekennzeichnet dadurch, dass**
- die Karte die Konsistenz des extrahierten öffentlichen Schlüssels überprüft.

6. Verfahren gemäß Patentanspruch 1 bis 5, **gekennzeichnet dadurch, dass**
- man die Konsistenz durch eine dem Verschlüsselungsalgorithmus inhärente Kontrolle überprüft.

7. Verfahren gemäß Patentanspruch 1 bis 6, **gekennzeichnet dadurch, dass**
- man auf die Karte die vorhergehende Information transferiert,
- man überprüft, ob das Bild der vorhergehenden Information mit dieser vorhergehenden Information übereinstimmt
- man die neue Information an das Lesegerät übermittelt.

8. Verfahren gemäß Patentanspruch 2, **gekennzeichnet dadurch, dass**
- man den öffentlichen Zertifizierungsschlüssel (CP) der Schlüssel in der Karte speichert.

9. Verfahren gemäß Patentanspruch 1 bis 8, **gekennzeichnet dadurch, dass**
- man im Lesegerät die Informationen, Zertifikate und aufeinander folgenden öffentlichen Schlüssel speichert (20').

10. Verfahren gemäß Patentanspruch 1 bis 9, **gekennzeichnet dadurch, dass** die Information eine Summierung und die Transaktion der Transaktionsinformation der Betrag einer Transaktion ist.

11. Verfahren gemäß Patentanspruch 1 bis 10, **gekennzeichnet dadurch, dass** die neue Information für die Karte auf der Grundlage der vorhergehenden Information und einer Transaktionsinformation berechnet wird.

## Claims

1. A method for certifying information in a reader, said method comprising the following steps:
- a pair of associated enciphering keys are stored in a smart card, namely a private key (SK1) of the card and a public key (PK1) of the card;
- the smart card receives (28) from the reader a preceding certificate corresponding to a preceding item of information as well as a preceding public key (PK0);
- the card extracts (24) from the preceding certificate an image of the preceding information, by implementing an enciphering algorithm for enciphering said preceding certificate by using the preceding public key;
- the card verifies (25) that the image of the information is consistent;
- the card signs a new item of information with its private key (SK1) by implementing an enciphering algorithm for obtaining a new certificate (31) corresponding to the new item of information; and
- the new certificate corresponding to the new item of information and the public key of the card (PK1) are stored (32, 33) in the reader.

2. A method for certifying an item of information in a reader, said method comprising the following steps:
- a pair of associated enciphering keys are stored in a smart card, namely a private key (SK0) of the card and certified public key (CPK) of the card;
a certification public key (PK) is stored in the card or in the reader, said certification public key being associated with a certification private key (SK), the certified public key of the card that is recorded in the card having been obtained by enciphering said public key of the card by implementing an enciphering algorithm using said certification private key;
- the smart card receives (23) from the reader a preceding certificate corresponding to a preceding item of information as well as a certified public key (CPK0) of a preceding card;
- the card extracts the public key from the preceding certificate by implementing an enciphering algorithm for enciphering the certified public key received from the preceding card, using the certification public key;
- the card extracts (24) an image of the preceding information, by implementing an enciphering algorithm for enciphering the preceding certificate by using the public key (PK0) of the preceding card, as previously extracted;
- the card verifies (25) that the image of the information is consistent;
- the card signs a new item of information with its private key (SK1) by implementing an enciphering algorithm using the private key of the card for obtaining a new certificate corresponding to the new item of information; and
- the new certificate and the certified public key of the card are stored (44, 46) in the reader.

3. A method according to claim 2, **characterized in that**:
- in the reader, the consistency of the certified public key of the card is verified (37).

4. A method according to claim 1, **characterized in that**:
- in the reader, the consistency of the new certificate is verified.

5. A method according to claim 2 or claim 3, **characterized in that**:
- the card verifies the consistency of the extracted public key.

6. A method according to any one of claims 1 to 5, **characterized in that**:
- the consistency is verified by an intrinsic verification that is specific to the enciphering algorithm.

7. A method according to any one of claims 1 to 6, **characterized in that**:
- the preceding information is transmitted to the card;
- a verification is performed to verify that the image of the preceding information is consistent with said preceding information; and
- the new information is transmitted to the reader.

8. A method according to claim 2, **characterized in that**:
- the certification public key (PK) for certifying the keys is stored in the card.

9. A method according to any one of claims 1 to 8, **characterized in that**:
- the successive items of information, certificates, and public keys are stored (20') in the reader.

10. A method according to any one of claims 1 to 9, **characterized in that** the information represents a running total and the transaction information represents an amount of a transaction.

11. A method according to any one of claims 1 to 10, **characterized in that** the new information is computed by the card on the basis of the preceding information and of transaction information.
